# EUROPÄISCHE PATENTSCHRIFT

(11) **EP 2 882 582 B1**
(45) Veröffentlichungstag und Bekanntmachung des Hinweises auf die Patenterteilung: **18.09.2019**
(21) Anmeldenummer: 13744527.6
(22) Anmeldetag: 31.07.2013
(51) Int. Cl.: B29C 48/315, B29C 48/25, B29C 48/92

(54) **VORRICHTUNG UND VERFAHREN ZUM STEUERN EINES EXTRUSIONSPROZESSES**
DEVICE AND METHOD FOR THE CONTROL OF AN EXTRUSION PROCESS
DISPOSITIF ET PROCÉDÉ POUR COMMANDER UNE OPÉRATION D'EXTRUSION

(30) Priorität: 08.08.2012 DE 102012214110
(43) Veröffentlichungstag der Anmeldung: 17.06.2015
(73) Patentinhaber: Polymer Competence Center Leoben GmbH, 8700 Leoben (AT)
(72) Erfinder: LANGECKER, Günter, 50825 Köln (DE); GEISSLER, Bernd, 8862 Stadl an der Mur (AT)
(74) Vertreter: Dilg, Haeusler, Schindelmann Patentanwaltsgesellschaft mbH
(86) Internationale Anmeldenummer: PCT/EP2013/066075
(87) Internationale Veröffentlichungsnummer: WO 2014/023625

(56) Entgegenhaltungen:
- EP-A1- 1 254 755
- EP-A1- 1 543 938
- WO-A1-01/60584
- DD-A1- 255 129
- DE-B3-102007 056 121
- JP-A- H08 267 535
- JP-A- H10 278 093
- JP-A- 2002 187 191

## Beschreibung

### Technisches Gebiet

Die Erfindung betrifft ein Verfahren zum Steuern eines Extrusionsprozesses, insbesondere eines Extrusionschäumprozesses, eine Extrusionsvorrichtung, ein Programmelement und ein computerlesbares Medium.

### Hintergrund

Aus dem Stand der Technik ist eine Vielzahl von Extrusionsvorrichtungen bekannt, welche beispielsweise dazu geeignet sind, Folien oder dünne Platten mittels eines Schäumvorgangs herzustellen. Zur Ausbildung einer gleichmäßigen Folie weisen die Extrusionsvorrichtungen eine so genannte Breitschlitzdüse auf, in welcher zur gleichmäßigen Verteilung der Extrusionsmasse oder Polymerschmelze bzw. zur Definition einer gleichmäßigen Pfadlänge über die gesamte Breite der Breitschlitzdüse ein so genannter Staubalken angeordnet ist. Da je nach gewünschter Anwendung Schäume mit verschiedenen Eigenschaften oder aus verschiedenen Materialien benötigt werden, müssen die Extrusionsvorrichtungen für jeden dieser Schäume, beispielsweise durch die Wahl entsprechender Breitschlitzdüsen, angepasst werden.

EP 1 543 938 A1 offenbart eine Schaum-bildende Form, welche einen Einlass, einen hohlen Teil und einen Kanal aufweist, wobei zwei rotierbare Körper, deren äußere Peripherie im Wesentlichen in der Form eines echten Kreises im Querschnitt gebildet ist, bei einem Endabschnitt des Kanals angeordnet sind und wobei das Ende des Kanals mittels dieser rotierbaren Körper verengt ist, um einen Entladeteil zu bilden.

EP 1 254 755 A1 offenbart eine flache Form und ein Formgießerzeugnis-Verfahren unter Benutzung derselben, wobei die flache Form einen Einlass zum Zuführen von geschmolzenem Harz von einem Extruder zu der Form dadurch aufweist, wobei ein Aufnahmebereich und rotierbare Körper zwischen einem hohlen Teil und einem Auslass gebildet sind.

JP H10278093 A offenbart einen Flussrate-Regulator für einen Formkopf. Flussrate-regulierende Stäbe sind rotierbar über einen Harzkanal bereitgestellt und verändern die Flussrate in einer axialen Richtung.

DE 10 2007 056 121 B3 offenbart eine Breitschlitzdüse und eine Anlage zum Beschichten mit thermoplastischem Beschichtungsmaterial, wobei die Breitschlitzdüse zwei Düsenkörper aufweist, die über einen Antrieb relativ zueinander verschiebbar und/oder verschwenkbar sind, wodurch die Breite der Düsenmündung einstellbar ist. Über Strukturen im Düsenkanal ist der Austritt von Beschichtungsmaterial aus der Breitschlitzdüse absperrbar.

JP H08267535 A offenbart eine Extrusionsform und ein Verfahren zum Steuern einer Flussrate, wobei die Extrusionsform und das Verfahren mit einem FlussRate-steuernden Gerät mit der Form eines Flussumleitungs-Teiles ausgestattet sind, welches sich derart erstreckt, um die Flusspassage transversal zu schneiden.

WO 01/60584 A1 offenbart eine Extrusionsvorrichtung, welche einen dynamischen Flussinduzierer hat, welcher ein bewegliches Element umfasst, zum Beispiel einen rotierbaren Stab, welcher transvers relativ zu dem Fluss des Fluides durch den Entlademund angeordnet ist. Wenn die extruierbare Flüssigkeit durch den Entlademund passiert wird, induziert die Bewegung des dynamischen Flussinduzierers die Akkumulation von Kontaminanten und verhindert damit ein Verstopfen der Extrusionsvorrichtung.

DD 255 129 A1 offenbart ein Breitschlitzwerkzeug mit einer Staueinrichtung zum Herstellen von breitflächigen Extrudatsträngen wie Platten, Folien, Reifenaufbauteilen und Protektoren aus plastischem Material durch Extrusion. In das Breitschlitzwerkzeug werden quer zum Materialstrom über die gesamte Konturbreite Stauwalzen mit kreisabschnittartigen Ausfräsungen eingebaut. Die Stauwalzen bestehen aus mindestens zwei separat voneinander von außen drehbaren Segmenten zur Einstellung unterschiedlicher Kanalhöhen und somit unterschiedlicher Fließwiderstände im Konturhohlraum des Breitschlitzwerkzeuges.

Ein Beispiel für eine Extrusionsvorrichtung ist beispielsweise aus der WO 01/60584 A1 bekannt. Die Extrusionsvorrichtung weist einen Verteilkanal mit einem Auslassmund und einem darin angeordneten dynamischen Flussbeeinflusser auf. Der Flussbeeinflusser weist ein bewegliches Element auf, welches quer zur Flussrichtung eines Fluids angeordnet ist, das durch den Auslassmund fließt. Wenn das Fluid durch den Auslassmund fließt, verhindert die Bewegung des dynamischen Flussbeeinflusser, dass sich der Verteilkanal mit Verschmutzungen oder mit Fluid zusetzt oder dieser verstopft wird.

### Zusammenfassung

Es mag ein Bedürfnis bestehen ein Verfahren zum Steuern eines Extrusionsprozesses, insbesondere eines Extrusionsschäumprozesses, eine Extrusionsvorrichtung, ein Programmelement und ein computerlesbares Medium zu schaffen, welches eine flexible Steuerung und flexible Verwendung der Extrusionsvorrichtungen ermöglicht, insbesondere solche, welche es ermöglichen Folien unterschiedlicher Eigenschaften mittels einer Extrusionsvorrichtung herzustellen, insbesondere zu schäumen.

Das Bedürfnis mag durch ein Verfahren zum Steuern eines Extrusionsprozesses, insbesondere eines Extrusionsschäumprozesses, eine Extrusionsvorrichtung, ein Programmelement und ein computerlesbares Medium gemäß den unabhängigen Ansprüchen erfüllt werden. Weitere exemplarische Ausführungsbeispiele werden in den abhängigen Ansprüchen beschrieben.

Gemäß einem exemplarischen Aspekt wird ein Verfahren zum Steuern eines Extrusionsprozesses, insbesondere eines Extrusionsschäumprozesses geschaffen, wobei das Verfahren mittels einer Extrusionsvorrichtung durchgeführt wird, wobei die Extrusionsvorrichtung einen Extrusionskanal mit einer Extrusionsdüse, welche dazu eingerichtet ist, eine Extrusionsmasse aus der Extrusionsvorrichtung auszugeben, wobei im Extrusionskanal ein steuerbarer Staubalken angeordnet ist, und eine Steuereinheit aufweist, wobei das Verfahren ein Steuern des Extrusionsprozesses mittels Einstellens eines Wertes zumindest eines Prozessführungsparameters des Extrusionsprozesses mittels Steuerns eines Betriebszustandes des steuerbaren Staubalkens aufweist.

Insbesondere mag die Extrusionsdüse eine Schlitzdüse, eine Breitschlitzdüse oder eine Nadeldüse sein. Ferner mag der steuerbare Staubalken eine zylindrische Form beispielsweise eine kreiszylindrische Form oder eine zylindrische Form mit einem ovalen Querschnitt aufweisen. Insbesondere mag das Steuern oder die Steuerung des Betriebszustandes kontinuierlich während des Extrussionsprozesses durchgeführt werden. Alternativ mag das Steuern des Betriebszustandes auch einmal oder mehrfach in zeitlichen Abständen vor und/oder während des Extrusionsprozesses durchgeführt werden.

Gemäß einem anderen exemplarischen Aspekt wird eine Extrusionsvorrichtung, insbesondere für einen Extrusionsschäumprozess, geschaffen, wobei die Extrusionsvorrichtung einen Extrusionskanal mit einer Extrusionsdüse, einen steuerbaren Staubalken und eine Steuereinheit aufweist, wobei die Extrusionsdüse dazu eingerichtet ist, eine Extrusionsmasse aus der Extrusionsvorrichtung auszugeben, wobei der steuerbare Staubalken in dem Extrusionskanal angeordnet ist und wobei die Steuereinheit derart eingerichtet ist, dass ein Wert zumindest eines Prozessführungsparameters eines Extrusionsprozesses mittels Steuerns eines Zustandes des steuerbaren Staubalkens eingestellt wird.

Insbesondere mag der steuerbare Staubalken auch als dynamischer Staubalken bezeichnet werden oder einen solchen darstellen. Beispielsweise mag der steuerbare Staubalken eine Achse aufweisen, welche exzentrisch oder zentrisch zum Querschnitt des Staubalkens ist. Diese Achsen mögen auch translatorisch bewegbar oder verschiebbar sein. Hierdurch mag es möglich sein, nicht nur die Staubalken um und/oder entlang der Achsen zu bewegen sondern auch den Bewegungsmittelpunkt, der durch die Achsen gebildet wird, zu verändern oder zu verschieben.

Gemäß einem anderen exemplarischen Aspekt wird ein computerlesbares Medium geschaffen, auf welchem ein Computerprogramm gespeichert ist, wobei das Computerprogramm derart eingerichtet ist, dass es, wenn es auf einem Prozessor ausgeführt wird, ein Verfahren gemäß einem exemplarischen Aspekt steuert.

Gemäß einem anderen exemplarischen Aspekt wird ein Programmelement geschaffen, welches derart eingerichtet ist, dass es, wenn es auf einem Prozessor ausgeführt wird, ein Verfahren gemäß einem exemplarischen Aspekt steuert.

Der Begriff "Staubalken" mag insbesondere einen Balken, eine Walze oder irgendein anderes beliebiges Objekt, beispielsweise auch ein Teil der Wand oder ein Wandelement, bezeichnen, welches in dem Extrusionskanal und/oder im Mund der Extrusionsdüse, zum Beispiel einem Breitschlitzdüsenmund, angeordnet ist und dazu eingerichtet ist, eine grobe Kompensation für Unterschiede in den Eigenschaften oder Charakteristiken der Extrusionsmasse oder Schmelze, z.B. eines Polymers, und/oder Unterschiede in der Pfadlänge, die die Extrusionsmasse durch die Extrusionsvorrichtung zurücklegen muss, zumindest teilweise auszugleichen. Beispielsweise mag der Staubalken mittels einer Walze gebildet werden oder eine Walze sein, welche einen kreisförmigen oder einen ovalen Querschnitt aufweist. Insbesondere mag der Staubalken in einer Lagerschale gelagert sein. Zum Beispiel mag die Lagerschale eine Lagerschale eines Gehäuses sein, wobei das Gehäuse den Extrusionskanal oder Abschnitte des Extrusionskanals ausbildet oder der Extrusionskanal innerhalb des Gehäuses angeordnet ist.

Der Begriff "Prozessführungsparameter", mag insbesondere einige oder alle Parameter bezeichnen, die einen Ablauf des Extrusionsprozess bestimmen oder zumindest einen Einfluss darauf haben oder die Eigenschaften des Endprodukts des Extrusionsprozesses beeinflussen. Prozessführungsparameter mögen sich insbesondere auf Kenngrößen in der Extrusionsvorrichtung oder im Werkzeug beziehen. Insbesondere mögen Prozessführungsparameter sich auf Parameter beziehen, die aktiv gesteuert werden können und die Einfluss auf die morphologischen Eigenschaften des Endprodukts haben, z.B. eine Anzahl und/oder Dichte von Gasblasen, welche im Endprodukt vorhanden sind. Beispiele für Prozessführungsparameter sind beispielsweise Temperatur, Druck, Dehn- und/oder Scherdeformationen, Geschwindigkeit und deren zeitlicher Verlauf oder örtlicher Verlauf sowie die Zeit, und beziehen sich insbesondere auf Größen in der Extrusionsmasse oder Schmelze. Die Werte dieser Prozessführungsparameter oder -größen haben wiederum Einfluss auf Kenngrößen des Extrusionsprozesses. Beispiele für solche Kenngrößen, welche durch die Auswahl oder Einstellung der Prozessführungsparameter beeinflusst werden, mögen die Blasenkeimbildungsrate, d.h. die Rate sein, mit welcher neue Blasenkeime, die als Keime für ein weiteres Blasenwachstum dienen, in der Extrusionsmasse gebildet werden, der so genannte Lösungsdruck eines Treibmittels für den Extrusionsprozess, d.h. den Druck, bei welchem das Treibmittel in Lösung übergeht, bzw. bei Unterschreitung des Lösungsdruckes aus der Extrusionsmasse beginnt auszugasen, oder die so genannte Zellwachstumsgeschwindigkeit, d.h. der Geschwindigkeit oder Rate, mit welcher Gaszellen in der Extrusionsmasse wachsen. Prozessführungsparameter müssen insbesondere von einer einfachen Säuberung oder Sauberhaltung des Extrusionskanals oder der Extrusionsdüse unterschieden werden. Eine solche reine Säuberung des Extrusionskanals beinhaltet keine gezielte Beeinflussung oder Einstellung von Prozessführungsparametern, welche zielgerichtet auf eine Änderung von Kenngrößen des Extrusionsprozesses hin durchgeführt werden. Insbesondere mag unter den Begriff "steuern" eine zielgerichtete Beeinflussung verstanden werden, welche beispielsweise von einer zufälligen Beeinflussung zu unterscheiden sein mag.

Der Begriff "Betriebszustand des Staubalkens" mag insbesondere den Betriebszustand des Staubalkens im Bezug auf physikalische Betriebszustandsgrößen, wie Temperatur oder Bewegung, z.B. Geschwindigkeit und/oder Richtung einer Bewegung des steuerbaren Staubalkens, bezeichnen.

Somit mag ein Betriebszustand des Staubalkens insbesondere von einer reinen geometrischen Ausformung oder Anordnung des Staubalkens, beispielsweise durch Ein- oder Ausfahren eines Staubalkens, zu unterscheiden sein. Während bei einer Änderung des Betriebszustandes des Staubalkens sich die geometrische Form nicht ändern mag, sondern nur physikalische Eigenschaften, wird bei einer Verschiebung des Staubalkens kein Betriebszustand geändert, sondern nur die geometrischen Anordnung bzw. die Form.

Insbesondere mag der steuerbare Staubalken eine zylindrische Form oder kreiszylindrische Form oder eine Zylinderform mit ovalem Querschnitt aufweisen.

Mittels der Steuerung des Betriebszustandes des steuerbaren Staubalkens mag es möglich sein, dass mit einem einzelnen Extruder oder einer einzigen Extrusionsvorrichtung eine Mehrzahl von verschiedenen Produkten herstellbar bzw. schäumbar ist. Insbesondere mag es möglich sein, mittels einer einzelnen Extrusionsdüse verschiedene geschäumte Endprodukte, z.B. Folien oder Platten, zu erzeugen oder zu schäumen, welche sich beispielsweise hinsichtlich Blasendichte und/oder Blasengröße und/oder Blasengrößenverteilung, Schaumdichte, Schaumdichtenverteilung über eine Dicke der Folie bzw. Platte unterscheiden. Auch mögen Änderungen in den Eigenschaften der Extrusionsmasse durch eine geänderte Steuerung, beispielsweise einem Ändern von Werten von Prozessführungsparametern kompensiert oder ausgeglichen werden, so dass verschiedene Extrusionsmassen verwendet werden können, ohne dass Einheiten oder Elemente der Extrusionsvorrichtung geändert oder angepasst werden müssen. Auch mag es möglich sein, mittels des steuerbaren Staubalkens eine Druckabfallsrate in dem Extrusionskanal vor und/oder nach dem Staubalken zu beeinflussen. Somit mag es möglich sein, eine schlagartige (explosionsartige) Entspannung der Extrusionsmasse oder Schmelze oder anders ausgedrückt eine zeitliche Druckänderung bzw. einen zeitlichen Druckgradienten zu erzielen. Ein solcher zeitlicher Druckgradient bzw. der Verlauf des zeitlichen Druckgradients mag wiederum den Extrusions- oder Schäumprozess beeinflussen.

Somit mag es möglich sein, auf einfache und flexible Weise eine Produktion umzustellen, ohne hierfür einen Austausch von Elementen oder Einheiten der Extrusionsvorrichtung vornehmen zu müssen. Insbesondere mag diese Flexibilität dadurch erreichbar sein, dass mittels des steuerbaren Staubalkens Dehn- oder Scherdeformationen in der Extrusionsmasse erreichbar sind, welche sich beispielsweise auf die Gasblasengenerierungsrate oder Nukleierungsrate auswirken, welche sich wiederum auf die Blasenanzahl oder Blasendichte in der Extrusionsmasse und folglich im geschäumten End- oder Zwischenprodukt oder Halbzeug auswirken.

Die Umstellung mag einfach mittels einer Änderung von Prozessführungsparametern über die Steuerung vorgenommen werden. Somit können auch innerhalb eines Endproduktes oder Zwischenproduktes Zonen mit unterschiedlichen Eigenschaften oder morphologischen Charakteristiken ausgebildet werden. Auch mag es möglich sein, so genannte Lochdüsenkonstruktionen, wie sie im Stande der Technik zur Definition von Extrusionsmassenpfadlängen bekannt sind, zu vermeiden, so dass glattere oder gleichmäßigere Oberflächen von Folien oder Platten erzielbar sind. Ferner mag das Verfahren für eine Mehrzahl von Extrusionsprozessen oder Schäumprozessen anwendbar sein, wie beispielsweise einem chemischen Schäumen oder einen physikalischen Schäumen von Polymeren. Je nach gewünschter Anwendung für die hergestellten geschäumten Folien oder Platten mag es mittels des Verfahrens ermöglicht werden, dass die hergestellten Folien oder Platten unterschiedliche Blasenstrukturen, unterschiedliche Schaumdichten, d.h. Gewicht je Volumeneinheit, unterschiedliche Blasendichte, d.h. die Anzahl der Blasen pro Volumeneinheit, unterschiedliche Blasengrößenverteilung, unterschiedliche Schaumdichtverteilung über eine Dicke der Folie oder Platte und/oder eine asymmetrische Dichteverteilung, z.B. geringere Schaumdichte mit offenen Poren auf einer Seite und geschlossene Poren mit großer Blasendichte oder Schaumdichte auf der anderen Seite, aufweisen. Insbesondere mögen mittels des Verfahrens Blasendichten zwischen 10⁶ bis 10¹², insbesondere zwischen 10⁷ und 10¹¹ beispielsweise in der Größenordnung von 5*10⁸ bis 1*10¹⁰ oder 7*10⁸ bis 2*10⁹ erreichbar sein.

Ein Kerngedanke eines beispielhaften Aspekts mag sein, dass es mittels eines steuerbaren Staubalkens, welcher Betriebszustände oder Zustände aufweist, die über eine Steuereinheit steuerbar sind, ermöglicht wird, auf einfache flexible Art und Weise eine Prozessführung eines Extrusionsprozesses, insbesondere eines Extrusionsschäumprozesses, zu beeinflussen, zu steuern oder zu regeln. Hierdurch mag es ermöglicht werden, dass mittels einer einzelnen Extrusionsvorrichtung, insbesondere nur einer einzelnen Extrusionsdüse oder einem Werkzeug, eine Mehrzahl von sich unterscheidenden Halbzeugen oder Endprodukten hergestellt werden können. Beispielsweise mag es mittels der Steuerung des Betriebszustands des Staubalkens möglich sein Prozessführungsparameter und damit Kenngrößen des Extrusionsprozesses, wie beispielsweise die Nukleierungsrate oder Keimbildungsrate zu steuern, zu regeln oder zu beeinflussen.

Im Folgenden werden weitere exemplarische Ausführungsbeispiele des Verfahrens zur Steuerung eines Extrusionsprozesses beschrieben, welche sich jedoch auch auf die Extrusionsvorrichtung, das computerlesbare Medium und das Programmelement beziehen.

Gemäß einem exemplarischen Ausführungsbeispiel eines Verfahrens zum Steuern eines Extrusionsprozesses beeinflusst, regelt oder steuert der Prozessführungsparameter eine Keimbildungsrate und/oder einen Lösungsdruck, und/oder eine Zellwachstumsgeschwindigkeit. Anders ausgedrückt mag mittels der Steuern des Betriebszustandes des steuerbaren Staubalkens ein Prozessführungsparameter gesteuert werden, welcher wiederum einen Einfluss auf eine oder mehrere Kenngrößen, wie beispielsweise die Keimbildungsrate, den Lösungsdruck und oder die Zellwachstumsgeschwindigkeit, hat.

Insbesondere mag mittels des steuerbaren Staubalkens eine Steuerung oder Regelung der Keimbildungsrate durchgeführt werden. Anders ausgedrückt mag die Steuerung des Extrusionsprozesses eine Steuerung einer Keimbildungsrate aufweisen. Die Keimbildungsrate mag eine geeignete Kenngröße sein, die mittels eines Prozessführungsparameters beeinflusst wird, welcher einerseits mittels eines Betriebszustandes des Staubalkens gut und/oder effektiv beeinflusst werden kann und andererseits den Extrusionsprozess beeinflusst. Beispielsweise mag die Keimbildungsrate mittels einer Dehn- und Scherdeformation, welche mittels des steuerbaren oder dynamischen Staubalkens in die Extrusionsmasse oder Schmelze eingebracht wird, beeinflusst werden. Anschaulich ausgedrückt stellt eine solche Scher- oder Dehndeformation eine Störung einer homogenen Extrusionsmasse oder Schmelze dar. Anders ausgedrückt mag mittels der Änderung oder Steuerung eines Prozessführungsparameters, z.B. einer Geschwindigkeitsverteilung der Extrusionsmasse oder Schmelze bzw. einer Scher- und Dehndeformation in der Schmelze, die Keimbildungsrate durch ein gezieltes Einbringen einer Störung oder eines thermodynamischen Ungleichgewichts in der Extrusionsmasse oder Schmelze beeinflusst werden. Solche Störungen können beispielsweise mittels Dehn- oder Scherdeformationen, mittels Zuschlagsstoffen, beispielsweise an deren Oberfläche, mittels chemischer Treibmittel, welche durch chemische Reaktionen eine Gasentwicklung bewirken, oder ähnliche Stoffe und/oder Vorgänge verursacht werden.

Gemäß einem exemplarischen Ausführungsbeispiel eines Verfahrens zum Steuern eines Extrusionsprozesses wird das Steuern des Extrusionsprozesses mittels Einstellens einer Bewegung des steuerbaren Staubalkens durchgeführt.

Insbesondere mag der Betriebszustand des Staubalken somit der Bewegungszustand des Staubalkens sein und der Wert des Prozessführungsparameters mag ein Geschwindigkeitswert und/oder ein Wert sein, der die Richtung der Bewegung des Staubalkens angibt, sein. Alternativ oder zusätzlich mag der Betriebszustand mittels einer Kräfte- und/oder Drehmomentmessung überwacht oder auch ermittelt werden. Beispielsweise mag eine Kraft- und/oder Drehmomentmessung am Staubalken durchgeführt werden, um mittels der Ergebnisse dieser Messung auf den Betriebszustand des Staubalkens zu schließen bzw. um diesen zu ermitteln.

Insbesondere mag das Steuern der Bewegung des steuerbaren Staubalkens kontinuierlich während des Extrusionsprozesses durchgeführt werden. Somit mag es möglich sein, während des Extrusionsprozesses auf diesen Einfluss zu nehmen bzw. diesen zu regeln, so dass beispielsweise innerhalb eines Endproduktes oder Zwischenproduktes Zonen mit unterschiedlichen Eigenschaften oder morphologischen Charakteristiken ausgebildet werden können. Der Bewegungszustand des Staubalkens mag beispielsweise mittels eines oder mehrerer Motoren bzw. eines Aktuatoren beeinflusst werden, welche den Staubalken rotatorisch und/oder translatorisch, d.h. beispielsweise entlang seiner Längsachse bewegen bzw. antreiben.

Gemäß einem exemplarischen Ausführungsbeispiel eines Verfahrens zum Steuern eines Extrusionsprozesses ist die Bewegung des steuerbaren Staubalkens eine Rotationsbewegung und/oder eine Translationsbewegung. Insbesondere mag die Steuerung die Geschwindigkeit und/oder eine Richtung der Bewegung betreffen.

Mittels einer Rotationsbewegung mag es insbesondere möglich sein, eine Dehndeformation in der Extrusionsmasse zu induzieren, wohingegen es mittels einer translatorischen oder axialen Bewegung möglich sein mag, eine Scherdeformation zu erzielen. Somit mag es bei einer kombinierten rotatorischen und axialen Bewegung möglich sein, sowohl Dehn- als auch Scherdeformationen in die Extrusionsmasse zu induzieren bzw. in dieser hervorzurufen. Insbesondere mag somit durch eine gezielte Auswahl der rotatorischen Bewegung und/oder der translatorischen Bewegung eine gezielte Auswahl der Größe von Dehn- und Scherdeformationen ermöglicht werden.

Der steuerbare Staubalken mag insbesondere rotierbare oder rotierende Elemente aufweisen oder mag selbst ein rotierbares Element darstellen, d.h. im Ganzen rotierbar sein. Der Begriff "rotierbar" mag insbesondere bedeuten, dass das entsprechende Element, welches als rotierbar bezeichnet wird, eine Drehung um mehr als 360°, d.h. mehr als eine volle Umdrehung insbesondere eine quasi unbegrenzte Anzahl von Umdrehungen, durchführen kann. Somit mag der Begriff "rotierbar" oder "Rotierbarkeit" eines Elements von einer auf weniger als eine volle Umdrehung eingeschränkten Hin- und Herbewegung des Elements zu unterscheiden sein. Die translatorische Bewegung wird erfindungsgemäss entlang der Längsachse des Staubalkens durchgeführt. Somit wird die translatorische Bewegung quer, senkrecht oder im Wesentlichen senkrecht zu der Bewegungsrichtung der Extrusionsmasse oder der Extrusionsrichtung durchgeführt werden.

Gemäß dem Verfahren zum Steuern eines Extrusionsprozesses ist die Bewegung eine oszillierende Bewegung.

Insbesondere mag die oszillierende Bewegung eine zyklische sich wiederholende Bewegung sein. Beispielsweise mag die oszillierende Bewegung eine translatorische oder axiale Hin- und Herbewegung sein oder eine rotatorische Hin- und Zurückbewegung sein. Hierdurch mag es möglich sein, dass zyklische Dehn- Stauch- und/oder Schervorgänge in Extrusionsmasse oder Schmelze induziert werden. Alternativ zu einer oszillierenden Bewegung mag die Bewegung eine stetige Bewegung, insbesondere eine stetige Rotationsbewegung sein.

Gemäß einem exemplarischen Ausführungsbeispiel eines Verfahrens zum Steuern eines Extrusionsprozesses wird die Bewegung bezüglich einer Achse des Staubalkens durchgeführt, welche zentrisch oder exzentrisch bezüglich des Staubalkens angeordnet ist.

Insbesondere mag die Achse somit entlang einer Symmetrieachse, beispielsweise eines Kreiszylinders oder eines Zylinders mit ovalen Querschnitt, gehen oder mag versetzt zu der Symmetrieachse angeordnet sein.

Gemäß einem exemplarischen Ausführungsbeispiel eines Verfahrens zum Steuern eines Extrusionsprozesses ist der Staubalken in einer Aufweitung oder einem Lumen des Extrusionskanals angeordnet, wobei die Bewegung bezüglich einer Achse des Staubalkens durchgeführt wird, welche zentrisch oder exzentrisch bezüglich einer Mittelachse der Aufweitung oder des Lumens angeordnet ist. Alternativ ausgedrückt mögen die Drehachse des Staubalkens und die Mittelachse oder Symmetrieachse der Aufweitung, beispielsweise eine Mittelachse einer kreiszylindrischen Aufweitung, exzentrisch oder versetzt zueinander sein. Es mag also eine bezüglich der Mittelachse der kreiszylindrischen Aufweitung exzentrische oder versetzte Lagerung des Staubalkens gegeben sein.

Insbesondere mag die Aufweitung mittels eines ein- oder mehrteiligen Gehäuses ausgebildet sein, welches eine Ausnehmung aufweist, welche die Aufweitung bildet, in welche dann wiederum der Staubalken angeordnet ist. Beispielsweise mag ein Teil des Gehäuses eine Lagerschale ausbilden, in dem eine Aufnahme für den Staubalken vorgesehen ist.

Mittels einer exzentrischen Anordnung der Bewegungsachse oder Drehachse in Bezug auf eine Symmetrieachse des Staubalkens und/oder in Bezug auf eine Mittel- oder Symmetrieachse der Aufweitung mag es möglich sein, einen Druckunterschied bzw. eine Druckbeaufschlagung der Extrusionsmasse durchzuführen, welche zu einer Dehndeformation führen mag. Insbesondere mag eine exzentrische Bewegungsachse, entweder in Bezug auf die Symmetrieachse der Aufweitung oder in Bezug auf die Symmetrieachse des Staubalkens ermöglichen, dass Dehn- oder Schervorgänge in der Extrusionsmasse induziert werden, da die Bewegung des Staubalkens, welcher beispielsweise eine Walze ist, bei einem Extrusionskanal mit gleichbleibenden Querschnitt auf unterschiedlichen Seiten des Staubalkens zu einer zyklischen oder stationären Verjüngung eines freien Raumes des Extrusionskanals kommt. Vorteilhaft an einer exzentrischen Lagerung mag insbesondere sein, dass mittels einer exzentrischen Lagerung ein kontinuierlicher Fluss mit aufgeprägten Dehn- und Scherdeformationen in der Extrusionsmasse erreichbar sein mag. Alternativ mögen sich bei einer zentrischen Lagerung Dehn- und/oder Scherdeformationen beispielsweise mittels eines Staubalkens erzeugen lassen, welcher einen nicht punktsymmetrischen Querschnitt, beispielsweise einen ovalen Querschnitt, aufweist.

Gemäß einem exemplarischen Ausführungsbeispiel eines Verfahrens zum Steuern eines Extrusionsprozesses ist der Betriebszustand des steuerbaren Staubalkens einer aus der Gruppe, die aus einer Rotationsgeschwindigkeit des Staubalkens, einer Rotationsrichtung des Staubalkens, einer Translationsgeschwindigkeit des Staubalkens, einer Translationsrichtung des Staubalkens und einer Temperatur des Staubalkens besteht.

Mittels der Steuerung eines Betriebszustandes, beispielsweise der Rotationsgeschwindigkeit und/oder Rotationsrichtung des Staubalkens mag eine effektive Einflussnahme auf bzw. Einstellung von Prozessführungsparameter, wie beispielsweise eine Geschwindigkeit bzw. deren zeitlicher oder örtlicher Verlauf, möglich sein. Hierdurch mag wiederum eine effektive Beeinflussung oder Einstellung von Kenngrößen, wie die Blasenkeimbildungsrate oder Keimbildungsrate, ermöglicht werden, welche einen Einfluss auf die morphologischen Eigenschaften, wie Blasendichte, im geschäumten Produkt oder Halbzeug haben.

Gemäß einem exemplarischen Ausführungsbeispiel eines Verfahrens zum Steuern eines Extrusionsprozesses ist der Staubalken temperierbar.

Insbesondere mag der Staubalken heizbar und/oder kühlbar sein. Beispielsweise mag eine Heizeinrichtung oder eine Kühleinrichtung im Staubalken angeordnet sein.

Mittels einer Temperierung oder einer Temperatursteuerung mag es möglich sein, eine Temperaturführung des Staubalkens zu ermöglichen, welche wiederum Auswirkungen auf Prozessführungsparameter, beispielsweise über eine Änderung eines Lösungsdruckes oder einer Diffusionsgeschwindigkeit in der Extrusionsmasse oder Schmelze, hat. Beispielsweise wirkt sich die Temperatur an der Staubalkenoberfläche auf eine Temperatur in der Extrusionsmasse oder Schmelze aus, was eine Auswirkung auf eine Blasenbildung bzw. auf ein Blasenwachstum haben mag. Somit mag es möglich sein, spezifische gewünschte maßgeschneiderte morphologische Charakteristiken des Endprodukts oder Halbzeugs zu erzielen. Beispielsweise mag mittels einer Temperaturführung auch ein Ausbilden von offenen oder geschlossenen Poren erreichbar sein. Insbesondere mögen offene Poren durch ein Reißen oder Zerplatzen von Blasenoberflächen erzielbar sein. Ein solches Reißen mag hierbei beispielsweise durch eine Temperatursteuerung steuerbar oder beeinflussbar sein. Zum Beispiel ist ein Blasenwachstum und damit auch die Wahrscheinlichkeit eines Zerreißens von Blasenoberflächen durch eine Zähigkeit oder Viskosität der Extrussionsmasse oder Schmelze abhängig, welche wiederum eine Funktion der Temperatur in der Schmelze ist.

Gemäß einem exemplarischen Ausführungsbeispiel eines Verfahrens zum Steuern eines Extrusionsprozesses weist die Extrusionsvorrichtung einen zweiten Staubalken auf.

Insbesondere kann eine Mehrzahl oder Vielzahl von Staubalken vorgesehen sein, wobei einer, mehrere oder alle als steuerbare Staubalken ausgebildet sind. Mittels des Vorsehens eines zweiten Staubalkens mag es möglich sein, einen größeren Einfluss auf die Prozessführungsparameter zu erzielen, insbesondere für den Fall, dass die beiden Staubalken unabhängig voneinander gesteuert werden. Jedoch ist zu bemerken, dass bereits ein einzelner steuerbarer Staubalken ausreichend ist, um eine Steuerung des Extrusionsprozesses zu ermöglichen.

Gemäß einem exemplarischen Ausführungsbeispiel eines Verfahrens zum Steuern eines Extrusionsprozesses führt der zweite Staubalken eine Bewegung durch, welche gleich einer Bewegung des steuerbaren Staubalkens ist.

Beispielsweise mag der zweite Staubalken eine rotatorische Bewegung oder eine Rotationsbewegung in eine erste Umdrehungsrichtung mit einer ersten Umdrehungsgeschwindigkeit haben, welche gleich der Umdrehungsrichtung und Umdrehungsgeschwindigkeit des steuerbaren Staubalkens ist.

Gemäß einem exemplarischen Ausführungsbeispiel eines Verfahrens zum Steuern eines Extrusionsprozesses führt der zweite Staubalken eine Bewegung durch, welche zu einer Bewegung des steuerbaren Staubalkens unterschiedlich ist. Durch eine solche unterschiedliche Bewegung von zwei oder mehrerer Staubalken mag es insbesondere möglich sein, gezielte Dehndeformationen hervorzurufen.

Beispielsweise mag die Bewegung des zweiten Staubalkens eine rotatorische Bewegung sein, welche in eine erste Umdrehungsrichtung mit einer ersten Umdrehungsgeschwindigkeit durchgeführt wird, wohingegen der steuerbare Staubalken eine Bewegung in eine zweite entgegengesetzte Umdrehungsrichtung und/oder mit einer anderen Umdrehungsgeschwindigkeit durchführt.

Nachfolgend werden exemplarische Ausführungsbeispiele der Extrusionsvorrichtung beschrieben. Die Ausgestaltungen gelten jedoch auch für das Verfahren zum Steuern eines Extrusionsprozesses, das computerlesbare Medium und das Programmelement.

Gemäß einem exemplarischen Ausführungsbeispiel der Extrusionsvorrichtung weist der steuerbare Staubalken an einer Oberfläche und/oder eine Ausnehmung, innerhalb der der steuerbare Staubalken angeordnet ist, eine spiralförmige Vertiefung auf.

Insbesondere mag die spiralförmige Vertiefung entlang einer Längsausdehnung des Staubalkens, beispielsweise einer Walze, und/oder entlang der Längsausdehnung der Ausnehmung angeordnet sein. Bevorzugt ist die spiralförmige Vertiefung entlang der Längsausdehnung der Ausnehmung oder einer Lagerungsschale des Staubalkens angeordnet oder ausgebildet. Eine solche spiralförmige Vertiefung, insbesondere entlang der Längsausdehnung der Ausnehmung, mag im Zusammenhang mit einer Rotation der Walze dazu führen, dass ein Transportvorgang eines Teiles der Extrusionsmasse entlang der Walze, d.h. quer zur Bewegungsrichtung der Extrusionsmasse, ermöglicht wird. Hierdurch mag es möglich sein, Schmutz oder Fremdstoffe, welche sich im Bereich des Staubalkens absetzen würden, abzuführen. Beispielsweise mag die spiralförmige Vertiefung mittels eines sägezahnartigen Profils auf einer Oberfläche der Ausnehmung in der Extrusionsvorrichtung ausgebildet sein. Alternativ mag die spiralförmige Vertiefung mittels einer oder mehreren einfachen Nuten oder Gräben ausgebildet sein, welche auf der Oberfläche der Ausnehmung oder Lagerschale ausgebildet sind. Ferner mag eine mittels eines sägezahnartigen Profils oder einer Nut ausgebildete Ausnehmungsoberfläche insbesondere eine hydrodynamische Schmierwirkung erzielen oder unterstützen, wobei mittels der spiralförmigen Vertiefung verbrauchtes Schmiermittel, z.B. durch Quetschung veränderte Schmelze, seitlich abgeführt wird.

Gemäß einem exemplarischen Ausführungsbeispiel der Extrusionsvorrichtung weist der Extrusionskanal eine Längsausdehnung auf, wobei entlang der Längsausdehnung ein Querschnitt des Extrusionskanals variiert.

Die Längsausdehnung des Extrusionskanals ist hierbei die Ausdehnung entlang derer die Extrusionsmasse bzw. Schmelze während des Extrusions- oder Schäumprozesses in der Extrusionsvorrichtung bewegt wird. Insbesondere mag sich der Querschnitt des Extrusionskanals verjüngen, verkleinern bzw. der Extrusionskanal mag einen sich konisch verändernden freier Querschnitt aufweisen. Eine solche Änderung des freien Querschnitts des Extrusionskanals mag es ermöglichen, während einer Bewegung der Extrusionsmasse entlang des Extrusionskanals Dehn- oder Schervorgänge in der Extrusionsmasse oder dem Polymer zu induzieren. D.h. die Extrusionsmasse mag entlang ihrer Bewegung durch den Extrusionskanal bereits durch die Änderung des Querschnittes einer Dehn- und/oder Scherdeformation unterworfen werden. Die auf diese Weise eingebrachten Dehndeformationen mögen die Menge von Nukleierungsmitteln, Zuschlagsstoffen und/oder Treibgas verringern, welche nötig ist, um gleiche Dichten oder Blasendichten im Endprodukt, beispielsweise einer Folie oder Platte, zu erzielen. Beispielsweise mag eine solche Verjüngung oder Verkleinerung des freien Querschnitts des Extrusionskanals auch mittels einer exzentrischen Lagerung oder Anordnung des Staubalkens bezüglich der Ausnehmung oder der Aufweitung sein, in welcher der Staubalken angeordnet ist, erreichbar sein.

Gemäß einem exemplarischen Ausführungsbeispiel der Extrusionsvorrichtung weist die Extrusionsvorrichtung ferner eine Temperierungsvorrichtung auf.

Insbesondere mag die Temperierungsvorrichtung eine Kühl- und/oder Heizvorrichtung sein, welche beispielsweise im steuerbaren Staubalken vorgesehen ist. Mittels des Vorsehens einer Temperierungsvorrichtung mag es möglich sein, großflächig auf die Temperatur der Extrusionsmasse oder Schmelze Einfluss zu nehmen.

Gemäß einem exemplarischen Ausführungsbeispiel der Extrusionsvorrichtung weist der steuerbare Staubalken und/oder eine Ausnehmung, innerhalb der der steuerbare Staubalken angeordnet ist, eine strukturierte Oberfläche, insbesondere mit einem sägezahnartigen Profil, auf. Beispielsweise mögen die Sägezähne einen Winkel zwischen 0 und 7 Grad, insbesondere zwischen 1 und 3 Grad aufweisen.

Besonders bevorzugt wird hierbei die strukturierte Oberfläche auf der Oberfläche des steuerbaren Staubalkens ausgebildet. Der Begriff "strukturierte Oberfläche" mag insbesondere bedeuten, dass die Oberfläche des steuerbaren Staubalkens und/oder der Ausnehmung, in welcher der steuerbare Staubalken angeordnet ist, eine Rauhigkeit aufweist, welche über einen vorgebaren Schwellwert liegt. D.h. die Oberfläche ist nicht glatt, sondern es werden willentlich Unebenheiten, welche gleichmäßig oder ungleichmäßig verteilt sind, in der Oberfläche ausgebildet. Diese können beispielsweise mittels Vorsprüngen oder Einbuchtungen in der Oberfläche des Staubalkens ausgebildet sein. Eine solche strukturierte Oberfläche, beispielsweise ein sägezahnartiges, schuppenartiges oder geripptes Profil, des Staubalkens mag geeignet sein, die Extrusionsmasse oder die Schmelze, die zum Wandgleiten neigt, mit einem sich bewegenden Staubalken mitzuschleppen. Ferner mag eine solche strukturierte Oberfläche eine hydrodynamische Schmierung ermöglichen, unterstützen oder verbessern, da die strukturierte Oberfläche bzw. die Strukturen der Oberfläche einen Teil der Schmelze als Schmiermittel mit sich führen mag. Auch mag beispielsweise eine sägezahnartige Struktur oder ein sägezahnartiges Profil an dem Staubalken dazu führen, dass eine Gleitbewegung (Wandgleiten) der Extrusionsmasse bzw. Schmelze an der Oberfläche des Staubalkens entlang verhindert oder zumindest in der Stärke verringert wird. Anschaulich mag somit das sägezahnartige Profil Gleitschuhe bilden. Beispielsweise mögen die Sägezahnnuten gleichverteilt oder homogen auf der Oberfläche des Staubalkens angeordnet sein oder ebenfalls ein spiralförmiges Profil ausbilden, mittels dessen ein seitlicher Abtransport von Material, z.B. einem Teil der Schmelze, ermöglicht werden mag. Insgesamt mag es somit mittels einer strukturierten Oberfläche des Staubalkens möglich sein, die physikalischen Bedingungen oder die Prozessführungsparamater in der Schmelze besonders effektiv zu beeinflussen.

Gemäß einem exemplarischen Ausführungsbeispiel der Extrusionsvorrichtung weist die Extrusionsvorrichtung eine Mehrzahl von Extrusionsdüsen auf.

Insbesondere mögen die Extrusionsdüsen übereinander angeordnet sein. Somit mag es möglich sein, eine mehrlagige Folie oder Platte herzustellen oder zu schäumen, wobei optional jede Lage oder Schicht anders ausgebildet sein mag, beispielsweise in ihren morphologischen Eigenschaften. Insbesondere mag jede der Extrusionsdüsen eine Schicht oder Lage der Folie oder Platte erzeugen. Beispielsweise mag eine Lage mit offenen Poren ausgebildet sein, wohingegen eine zweite Lage mit geschlossenen Blasen oder Poren ausgebildet sein mag. Auch unterschiedliche Poren- oder Blasengrößen mögen mittels einer Steuerung erreichbar sein.

Jede der Extrusionsdüsen kann dabei mit einem eigenen Extrusionskanal verbunden sein. Alternativ oder zusätzlich können auch mehrere Extrusionsdüsen mit einem gemeinsamen Extrusionskanal verbunden sein. Gemäß einem Ausführungsbeispiel mag ein zusätzlicher Extrusionskanal mit einer zusätzlichen Extrusionsdüse ausgebildet sein, wobei in dem zusätzlichen Extrusionskanal ein zusätzlicher steuerbarer Staubalken angeordnet sein mag. Somit mag es auf einfache Weise möglich sein, auch bei der Verwendung einer einzigen Extrusionsmasse oder Schmelze eine Folie oder Platte mit zwei Lagen unterschiedlicher Eigenschaften herzustellen. Es sollte jedoch bemerkt werden, dass zur Erzielung unterschiedlicher Lagen mit unterschiedlichen Eigenschaften es nicht notwendig ist, dass auch mehrere Extrusionskanäle und/oder mehrere steuerbare Staubalken ausgebildet sind.

Gemäß einem exemplarischen Ausführungsbeispiel weist die Extrusionsvorrichtung ferner eine Sensoreinheit auf, welche dazu eingerichtet ist, einen Betriebszustand des steuerbaren Staubalkens zu bestimmen.

Beispielsweise mag ein Temperatursensor und/oder eine Drehmomentsensor und/oder ein Sensor zum Bestimmen einer Umdrehungsgeschwindigkeit oder Umdrehungsanzahl vorgesehen sein. Mittels solcher Sensoren oder Sensoreinheiten kann der Betriebszustand des steuerbaren Staubalkens überwacht werden, wodurch eine Qualitätssicherung ermöglichbar sein kann. Ferner können die Messergebnisse der Sensoreinheit auch dazu verwendet werden, um für die Steuerung des steuerbaren Staubalkens verwendet zu werden. Die Steuerungseinheit kann somit möglicherweise auch als Regeleinheit ausgelegt werden, welche basierend auf gemessenen oder IstWerten eine Steuerung bzw. Regelung durchführt.

Durch eine Drehmoment- und Umdrehungsgeschwindigkeitsmessung mittels Sensoren mag beispielsweise bestimmbar sein, in welchem Umfange zusätzliche Energie zur Erzeugung von Scher- und/oder Dehndeformation zur Verfügung steht. D.h. es mag bestimmbar sein, wie viel zusätzliche Scherenergie eingebracht wird. Diese Information mag dann für eine nachfolgende Steuerung bzw. Regelung mittels der Steuer- oder einer Regeleinheit verwendet werden. Durch eine solche Regelung mittels einer zur Regeleinheit ausgebildeten Steuereinheit mag es somit möglich sein, Ist-Werte bezüglich des Betriebszustandes des Staubalkens zu regeln und sie somit an gewünschte Soll-Werte anzupassen bzw. auf diese einzustellen. Dies mag insbesondere eine flexible Steuerung bzw. Regelung des Betriebszustandes des Staubalkens und somit auch des Extrusionsprozesses ermöglichen und folglich die Qualität des mittels des Extrusionsprozesses erzeugten bzw. hergestellten Produktes.

Zusammenfassend mag gemäß einem exemplarischen Ausführungsbeispiel ein Verfahren zum Steuern eines Extrusionsprozesses, mittels welchem insbesondere geschäumte Kunststoffplatten bzw. Kunststofffolien mit unterschiedlichen Schaumstruktureigenschaften herstellbar sind. Hierzu weist die Extrusionsvorrichtung einen steuerbaren oder dynamischen Staubalken auf, mittels dessen Steuerung durch eine Steuereinheit Werte oder Größen von Prozessführungsparametern beeinflusst werden können, ohne das die Geometrie der Extrusionsvorrichtung, beispielsweise einer Extrusionsdüse oder Breitschlitzdüse, geändert werden muss. Insbesondere ist das Verfahren für das Herstellen von geschäumten Kunststoffplatten oder Kunststofffolien geeignet.

Mittels eines steuerbaren oder dynamischen Staubalkens mag es insbesondere möglich sein, Abhängigkeiten, welche beispielsweise zwischen der Nukleierungsrate und der Dehnung in der Schmelze oder zwischen dem Entgasungsdruck und der Scherdeformation bestehen, auszunutzen. Auch der zeitliche Verlauf des Druckes oder die zeitliche Druckänderung, welche die Schmelze bei ihrer Durchquerung des Extrusionskanals erfährt, mögen ausnutzbar sein. Beispielsweise ergibt sich bei einem schnellen Schmelzedruckabbau, d.h. einem schnelleren Durchfluss der Schmelze durch die Extrusionsvorrichtung, eine höhere Nukleierungsrate und damit eine feinere Zellstruktur, als in dem Fall dass die Schmelze die Extrusionsvorrichtung langsamer durchfließt oder durchquert.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch anzusehen.

### Kurzbeschreibung der Figuren

Fig. 1 zeigt schematisch eine Extrusionsvorrichtung.
Fig. 2 zeigt schematisch einen Aufbau einer Breitschlitzdüse.
Fig. 3 zeigt schematisch die Verhältnisse in einem lochförmigen Extrusionskanal.
Fig. 4 zeigt schematisch eine Staubalkenanordnung gemäß einem exemplarischen Ausführungsbeispiel der Erfindung.
Fig. 5 zeigt schematisch eine Extrusionsdüse gemäß einem exemplarischen Ausführungsbeispiel.
Fig. 6 zeigt schematisch eine weitere Staubalkenanordnung gemäß einem exemplarischen Ausführungsbeispiel.
Fig. 7 zeigt schematisch eine exzentrische Staubalkenanordnung gemäß einem exemplarischen Ausführungsbeispiel.

### Ausführliche Beschreibung

Es wird darauf hingewiesen, dass Merkmale bzw. Komponenten von unterschiedlichen Ausführungsbeispielen, die mit den entsprechenden Merkmalen bzw. Komponenten des Ausführungsbeispiels nach gleich oder zumindest funktionsgleich sind, mit den gleichen Bezugszeichen oder mit einem Bezugszeichen versehen sind, welches sich lediglich in seiner ersten Ziffer von dem Bezugszeichen eines (funktional) entsprechenden Merkmals oder einer (funktional) entsprechenden Komponente unterscheidet. Zur Vermeidung von unnötigen Wiederholungen werden bereits anhand eines vorher beschriebenen Ausführungsbeispiels erläuterte Merkmale bzw. Komponenten an späterer Stelle nicht mehr im Detail erläutert.

Ferner wird darauf hingewiesen, dass die nachfolgend beschriebenen Ausführungsbeispiele lediglich eine beschränkte Auswahl an möglichen Ausführungsvarianten darstellen. Insbesondere ist es möglich, die Merkmale einzelner Ausführungsbeispiele in geeigneter Weise miteinander zu kombinieren, so dass für den Fachmann mit den hier explizit dargestellten Ausführungsvarianten eine Vielzahl von verschiedenen Ausführungsbeispielen als offensichtlich offenbart anzusehen sind.

Einleitend wird nochmals kurz auf die grundsätzlichen Gegebenheiten beim Extrudieren von Folien oder Platten eingegangen.

Betrachtet wird insbesondere das physikalische Schäumen oder Extrudieren von Extrusionsmassen wie beispielsweise Polymeren. Das nachfolgend beschriebene Verfahren eines Verwendens eines steuerbaren oder dynamischen Staubalkens ist aber auch für ein chemisches Schäumen umsetzbar. Beim physikalischen Schäumen wird im Extrusionsprozess zunächst ein Gas, z.B. CO₂ oder N₂, welches als Treibmittel dient, im überkritischen Zustand in die unter Druck stehende Polymerschmelze eingemischt. Hierbei geht das Gas in einem zeit- und wegabhängigen Mischprozess in Lösung und bildet mit der Schmelze eine Phase. Die aufbereitete Schmelze wird vor der Formgebung in einer Extrusionsdüse, beispielsweise einer Breitschlitzdüse, oder im Werkzeug soweit herunter gekühlt, dass sie einerseits im Werkzeug noch ausreichend fließfähig ist und andererseits außerhalb der Extrusionsdüse bereits eine höhe Zähigkeit aufweist.

Unterhalb des kritischen Lösungsdrucks des Gases im Düsenaustragsbereich bilden sich an Nukleierungskeimen in der Schmelze die ersten Gasblasen. Das Wachstum der Anzahl und Größe der Gasblasen im Düsenaustragsbereich folgt dem thermodynamischen Gleichgewicht beider Phasen bzw. wird beeinflusst durch die Zeit, die substantielle Druckänderung, die Temperatur und Diffusionsgeschwindigkeit des gelösten Gases in der Schmelze.

Wichtige Einflussgrößen beim physikalischen Schäumen sind insbesondere die Polymermatrix, d.h. insbesondere ob der resultierende Kunststoff ein amorpher oder teilkristalliner Kunststoff ist, das Treibmittel bzw. Treibgas, Zuschlagstoffe wie Talkum, die gleichzeitig als Gasblasenkeimbildner dienen, Nukleierungshilfsmittel, d.h. insbesondere chemische Zusätze, die beim Zerfall Gas als Keime entstehen lassen, die Polymereigenschaften wie Scher- und Dehnviskosität, Diffusion der Treibgase im Polymer, Prozessführungsgrößen oder -parametern, wie beispielsweise Temperatur, Druck, Geschwindigkeit und Zeit, in der Extrusionsmasse und in der Extrusionsvorrichtung oder im Werkzeug sowie die Geometrie des Werkzeuges.

Insbesondere wird die Nukleierung und damit die Schaumstrukturausbildung im Prozess nicht nur durch die material- und zuschlagstoffabhängigen Einflussgrößen beeinflusst, sondern ebenfalls durch Prozessführungsparameter in der Extrusionsvorrichtung bzw. in dem Werkzeug entscheidend beeinflusst. Für die Nukleierung sind insbesondere die nachfolgenden Kenngrößen von Bedeutung:
1. Blasenkeimbildungsrate, die eine Funktion der zeitlichen Druckänderung der Polymerschmelze sowie von Scher- und Dehndeformationen in der Extrusionsdüse oder im Düsenmund ist.
2. Lösungsdruck des Treibmittels, der eine Funktion der Viskosität der Extrusionsmasse oder des Polymers ist, welche wiederum eine Funktion der Schergeschwindigkeit, der Temperatur und des äußeren Druckes ist.
3. Zellwachstumsgeschwindigkeit, die eine Funktion der Treibmitteldiffusion, der Temperatur, der Viskosität und der Deformationsgeschwindigkeit ist.

Beispielsweise lassen sich diese drei Kenngrößen durch einen steuerbaren und optional temperaturgeführten Staubalken, der eine oder mehrere stetig rotierender bzw. oszillierender Walzen im Bereich eines Breitschlitzdüsenmundes aufweist, beeinflussen, wohingegen ein üblicher statische Staubalken keine direkte Prozessoptimierung erlaubt. Durch die Steuerung ist es möglich eine Prozessoptimierung durchzuführen und/oder eine Qualitätssicherung durchzuführen, beispielsweise indem Sensordaten ausgenutzt werden, welche den steuerbaren Staubalken sensorisch abtasten. Beispielsweise mag eine Drehmomentmessung oder eine Temperaturmessung am Staubalken vorgenommen werden, deren Ergebnisse dann für die Steuerung des Staubalkens verwendet bzw. berücksichtigt werden. Die Drehrichtung des dynamischen Staubalkens kann in und entgegen einer Durchsatzrichtung der Extrusionsmasse oder des Polymers erfolgen, wobei gezielt der Druck und die Deformation in der Schmelze geändert werden mögen. Oszillierende Bewegungen des steuerbaren oder dynamischen Staubalkens können in Umfangs- und/oder Axialrichtung erfolgen. Die Einleitung von Dehn- und Schervorgängen mag insbesondere durch eine Scherspaltverjüngung, einem ovalen Querschnitt des Staubalkens bzw. durch eine exzentrisch gelagerte Walze gegenüber einer äußeren Kontur des Extrusionskanals geschehen. Die auf diese Weise in die Schmelze eingebrachten Dehndeformationen mögen vorteilhafterweise bei gleichen Schaumdichten den Anteil an Hilfsmitteln für die Nukleierung und an Treibgas reduzieren.

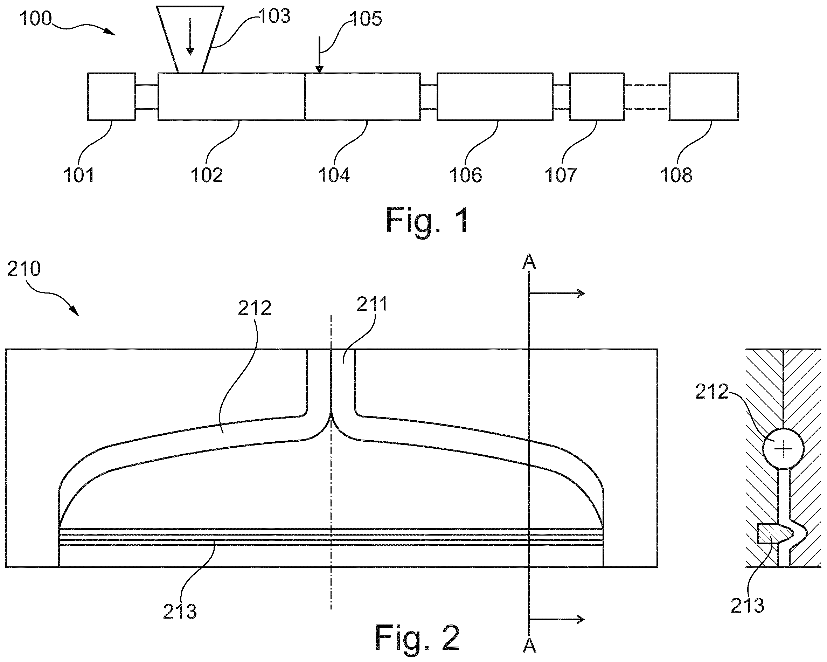

Im Folgenden werden die Figuren eingehender beschrieben. Fig. 1 zeigt einen schematischen Aufbau einer Extrusionsvorrichtung 100, welche einen Antrieb 101, einen Aufschmelzbereich 102 mit einem Eingang 103 für eine Extrusionsmasse, beispielsweise einem Polymer und benötigte Zuschlagsstoffe, einen Mischbereich 104 mit einen Einlass 105 zum Eindüsen von Treibmittel, z.B. CO₂ oder N₂, einen Abkühlbereich 106 und ein Werkzeug 107 zum Urformen eines Halbzeugs mittels einer Breitschlitzdüse aufweist. Schematisch ist ferner eine Nachfolgeeinheit 108 gezeigt, mit welcher weitere Umformungen vorgenommen werden können.

Im Einzelnen wird mittels des Antriebs 101 beispielsweise eine Schnecke angetrieben, welche dazu dient, die Stoffe, die durch den Eingang 103 zugeführt und im Aufschmelzbereich 102 aufgeschmolzen werden, zu homogenisieren und Druck aufzubauen. Nachfolgend wird das aufgeschmolzene Polymer im Mischbereich 104 mit Treibmittel versetzt und in ein Einphasensystem überführt. Der Abkühlbereich 106 dient dann dazu, das Einphasensystem weiter zu homogenisieren, zu kühlen und den Druck auf den Werkzeugeinspeisedruck zu erhöhen. Zur Druckerhöhung kann optional eine zweite Schnecke eingesetzt werden. Im Werkzeug 107 wird dann das Polymer bzw. die Polymerschmelze zu einem Halbzeug urgeformt, beispielsweise mittels einer Breitschlitzdüse. Das urgeformte Halbzeug wird nachfolgend zu der Nachfolgeeinheit 108 weitertransportiert, in der eine weitere Formung stattfinden kann.

Fig. 2 zeigt schematisch einen Aufbau einer Breitschlitzdüse 210. Insbesondere sind in Fig. 2 eine Schmelzeinspeisung 211 dargestellt, welche ein Teil eines Extrusionskanals der Extrusionsvorrichtung 100 ist. An die Schmelzeinspeisung 211 schließt sich ein Verteilerkanal 212 an, welcher dazu dient, die Schmelze in der Breitschlitzdüse 210 über einen großen Bereich der Gesamtbreite zu verteilen. Ferner zeigt die Fig. 2 schematisch einen Staubalken 213, welcher sich über die Breite der Breitschlitzdüse 210 erstreckt. Zur Veranschaulichung ist im rechten Bereich der Fig. 2 ein Querschnitt der Breitschlitzdüse 210 entlang der Linie A-A gezeigt. In dieser Skizze ist der Staubalken nur schematisch dargestellt.

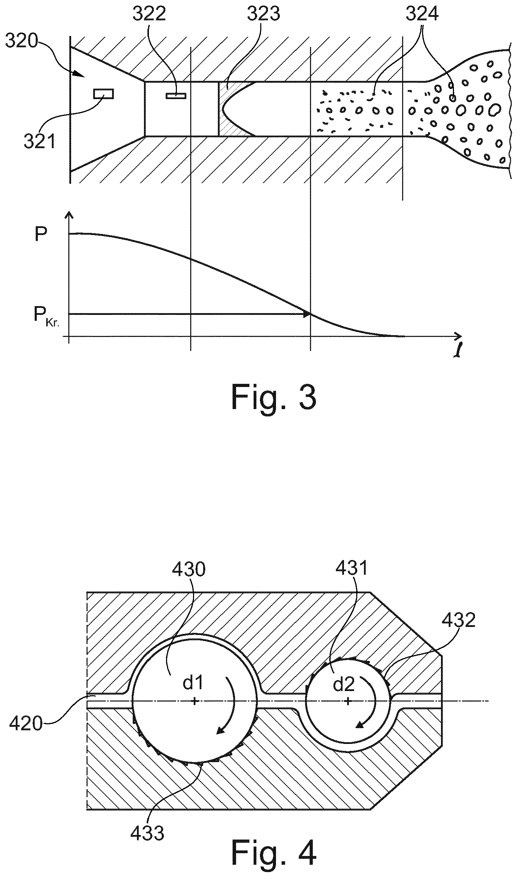

Fig. 3 zeigt schematisch die Verhältnisse in einem Extrusionskanal 320. Insbesondere zeigt die Fig. 3 den Extrusionskanal 320 einer Extrusionsvorrichtung 100 und die Verhältnisse der Extrusionsmasse bzw. der Polymerschmelze in dem Extrusionskanal. Zur Veranschaulichung ist ein Volumenelement 321 eingezeichnet, welches mit einer Verjüngung des Extrusionskanals gedehnt wird, was durch ein Volumenelement 322 angedeutet wird. Ferner ist schematisch die Stärke der Scherung der Polymerschmelze über die Kanalhöhe 323 eingezeichnet. Vereinfacht ist die Stärke der Scherung proportional zu einem differenziellen Geschwindigkeitsunterschied zwischen benachbarten Fluidbereichen. Dieser ist im Randbereich am höchsten, da dort die Geschwindigkeit durch die Reibung der Extrusionsmasse an der Wandung des Extrusionskanals am niedrigsten ist. Fällt nun der Druck in der Extrusionsmasse unter einen kritischen Druckwert P_{Kr} beginnt eine Bildung von Gasblasenkeimen, welche als Nukleierungskeime dienen. Die schematisch und vergrößert dargestellten Gasblasen sind Fig. 3 mit dem Bezugszeichen 324 versehen. Insbesondere findet das Wachstum der Blasen im Zentralbereich des Extrusionskanals statt, da dort sowohl eine geringe Scherung vorhanden ist als auch grundsätzlich eine höhere Temperatur vorhanden ist.

Im unteren Abschnitt der Fig. 3 ist schematisch der Druckverlauf über die Länge l des Extrusionskanals, wie er im oberen Abschnitt der Fig. 3 dargestellt ist, gezeigt. Über den Verlauf des Extrusionskanals fällt der Druck p ab, bis dieser im Bereich des Auslasses der Extrusionsdüse auf Null abgefallen ist. Hier findet dann im Wesentlichen ein Wachstum der Blasen statt, deren Keime vorher auf vielfältige oben beschriebene Arten gebildet werden können.

Fig. 4 zeigt schematisch eine Staubalkenanordnung gemäß einem exemplarischen Ausführungsbeispiel der Erfindung. Insbesondere zeigt Fig. 4 eine Staubalkenanordnung, die zwei Walzen 430, 431 als steuerbare Staubalken hat, welche bezüglich der Fließrichtung der Extrusionsmasse hintereinander in einem Extrusionskanal 420 angeordnet sind. Die beiden Walzen 430 und 431 haben einen unterschiedlichen Durchmesser d1 und d2 und sind in einer Ausnehmung 433 angeordnet. Die Ausnehmung 433 weist, an ihrer Oberfläche ein sägezahnartiges Profil 432 auf. Das sägezahnartige Profil kann vollumfänglich bzw. in voller Breite der Ausnehmung oder auch nur in Teilbereichen der Ausnehmung angeordnet sein und einer Schmierwirkung dienen. Das sägezahnartige Profil 432 mag insbesondere spiralförmig ausgebildet sein bzw. eine spiralförmige Vertiefung bilden, mittels welcher Teile der Extrusionsmasse oder Schmelze, welche als Schmiermittel gewirkt haben, seitlich abgeführt werden können. Zusätzlich mag auch die Oberfläche eines oder beider steuerbaren Staubalken mit einem sägezahnartigen Profil ausgebildet sein, welches eine Gleitschuhoberfläche bildet. Mittels des sägezahnartigen Profils insbesondere des Staubalkens wird, insbesondere bei wandgleitenden Polymeren, die Extrusionsmasse bzw. Polymerschmelze mitgeschleppt, so dass sich eine Schleppströmung ausbildet. Die Walzen 430 und 431 sind drehbar und entlang einer Achse beweglich gelagert und können mittels einer Steuereinheit getrennt angesteuert werden, wodurch Betriebszustände der Walzen gesteuert werden, um so Werte von zumindest einem Prozessführungsparameter einzustellen. Eine jeweilige Drehrichtung der Walzen kann getrennt oder gemeinsam gesteuert werden. Optional sind die Walzen auch temperierbar, indem sie beispielsweise mit einer Kühleinrichtung verbunden oder versehen sind. Je nach Steuerung mittels der Steuereinheit können die Walzen in der gleichen Richtung oder in entgegengesetzter Richtung und/oder mit unterschiedlicher Geschwindigkeit betrieben werden. Ferner können die Walzen auch noch axial bewegt werden. Alle Bewegungen können hierbei entweder oszillierend oder kontinuierlich ausgeführt werden.

Je nach den mittels der Steuereinheit eingestellten Betriebszuständen der Walzen bilden sich unterschiedliche Scher- und Dehndeformationen in der Extrusionsmasse aus, welche dazu verwendet werden können, um einen Extrusionsprozess zu steuern.

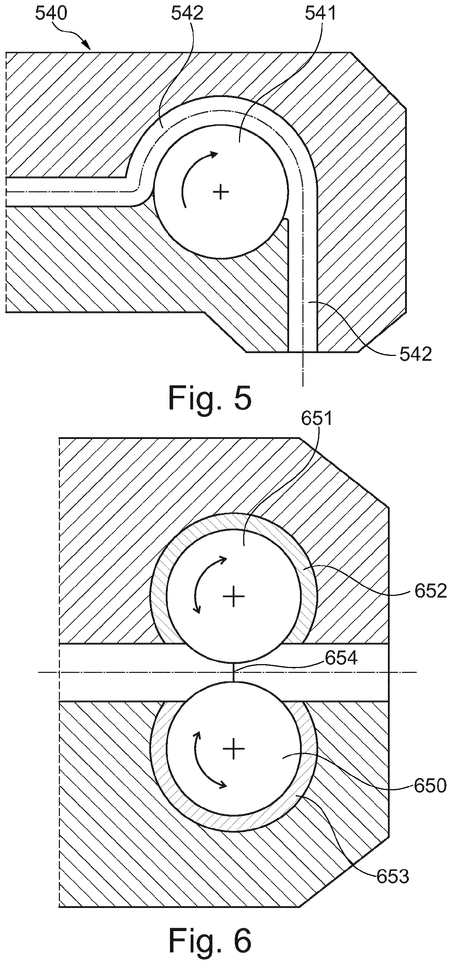

Fig. 5 zeigt schematisch eine Extrusionsdüse gemäß einem exemplarischen Ausführungsbeispiel. Insbesondere zeigt Fig. 5 eine Extrusionsdüse 540 mit einem tangentialen Extrusionsmassen- oder Schmelztaustritt. In der Extrusionsdüse wird mittels einer Rotation eines steuerbaren Staubalkens oder einer steuerbaren Walze 541, die Schmelze mitgeschleppt und in ihrer Fließrichtung abgelenkt, so dass auf einfache und effiziente Weise ein Schmelzaustritt in jede gewünschte Richtung möglich ist. Insbesondere mag der Extrusionskanal 542, der mittels eines Spalts zwischen dem Staubalken und der Extrusionskanalwand gebildet wird, so eng sein, dass die Schmelze nur mittels der Rotation des Staubalkens durch den Extrusionskanal die Extrusionsdüse verlassen oder aus ihr austreten kann. Es wird somit eine Schleppströmung aufgezwungen, welche durch die Steuerung des Staubalzens bzw. der Walze gut steuerbar ist.

Fig. 6 zeigt schematisch eine weitere Staubalkenanordnung gemäß einem exemplarischen Ausführungsbeispiel. Insbesondere zeigt Fig. 6 ein Ausführungsbeispiel, bei welchem zwei steuerbare Staubalken 650 und 651 in Form von Walzen vorgesehen sind, welche unabhängig voneinander oder gemeinsam steuerbar sind. Die Walzen 650 und 651 sind in korrespondierenden keramischen Verschleißbuchsen 652 und 653 angeordnet, welche sowohl einer Verringerung des Verschleißes als auch einer thermischen Isolierung dienen. Eine solche thermische Isolierung ist insbesondere vorteilhaft, im Falle dass die Walzen selber temperierbar, z.B. kühlbar, ausgebildet sind. Als Betriebszustände der Walzen, welche steuerbar sind, sind insbesondere die Drehrichtung und die Drehzahl der Walzen zu nennen, welche den Grad der Druckentspannung hinter den Walzen bestimmen.

In dem Ausführungsbeispiel der Fig. 6 sind die beiden Walzen nicht wie in dem Ausführungsbeispiel der Fig. 4 in Flussrichtung der Schmelze hintereinander angeordnet, sondern liegen sich einander gegenüber in Bezug auf die Flussrichtung der Schmelze. Die beiden Walzen bilden somit eine kalanderähnliche Anordnung im Austrittsbereich der Breitschlitzdüse. Somit fließt die Schmelze zwischen den beiden Walzen hindurch, zwischen denen ein Spalt 654 ausgebildet ist, der im Bereich der Walzen den Extrusionskanal bildet. Je nach Ausbildung der Walzen und deren Lagerung ist es auch möglich, den Spalt zwischen den beiden Walzen zu verändern, d.h. zu vergrößern oder zu verkleinern. D.h. die steuerbaren Staubalken können an beweglichen Achsen gelagert sein.

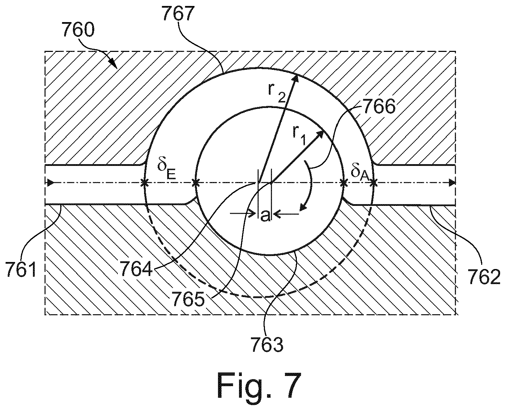

Fig. 7 zeigt schematisch eine vereinfachte exzentrische Staubalkenanordnung gemäß einem exemplarischen Ausführungsbeispiel. Insbesondere zeigt Fig. 7 einen Teil einer Extrusionsdüse und eines Extrusionskanals 760 mit einer Einlaufseite 761 und einer Auslaufseite 762, in welchem ein exzentrischer Staubalken 763 in Form einer Walze angeordnet ist. Der Staubalken ist um eine Achse 765 drehbar gelagert, welche mit der Mittelachse oder Symmetrieachse des kreiszylindrischen Staubalkens zusammenfällt. Die Drehachse 765 ist jedoch exzentrisch in Bezug auf die Mittelachse oder Symmetrieachse 764 eines kreiszylindrischen Lumens oder einer kreiszylindrischen Aufweitung 767 angeordnet, in welchem der Staubalken 763 angeordnet ist, so dass das Ausführungsbeispiel der Fig. 7 eine exzentrische Staubalkenanordnung zeigt. Zur Verdeutlichung ist in der Fig. 7 die Exzentrizität a eingezeichnet, welche den Abstand zwischen dem Mittelpunkt 765 der Walze bzw. Drehachse und dem Mittelpunkt 764 der Aufweitung 767 angibt. Die exzentrische Anordnung des Staubalkens führt zu einer Verjüngung des freien Querschnitts des Kanals innerhalb der Aufweitung 767 von der Einlaufseite zur Auslaufseite hin. Zur Veranschaulichung ist der freie Querschnitt auf der Einlaufseite mit δ_{E} und auf der Auslaufseite mit δ_{A} bezeichnet. Insbesondere gilt in dem Ausführungsbeispiel der Fig. 7, dass δ_{E} = 2a+ δ_{A} gegeben ist. Der Staubalken führt eine Bewegung um seine bezüglich des Mittelpunktes 764 der Aufweitung 767 exzentrisch oder nicht koaxial gelagerte Drehachse 765 durch, wenn der Staubalken eine Rotation durchführt, die in Fig. 7 mit dem Pfeil 766 angedeutet ist. Ferner sind noch der Durchmesser des Staubalkens 763 als r₁ und der Durchmesser der kreiszylindrischen Aufweitung 767 als r₂, in Fig. 7 eingezeichnet.

Durch die Bewegung des Staubalkens kommt es für die Extrusionsmasse oder Schmelze im Extrusionskanal innerhalb der kreiszylindrischen Aufweitung 767 zu einer örtlichen Änderung des freien Querschnittes, durch welchen die Schmelze hindurchtreten kann, was zu Dehn- und Scherdeformationen in der Schmelze führt.

Insbesondere mag es vorteilhaft sein, wenn der Staubalken im Wesentlichen als Kreiszylinder ausgebildet ist oder eine Zylinderform aufweist. Auf der Oberfläche des Zylinders mögen Oberflächenstrukturen oder Elemente angeordnet oder ausgebildet sein. Demgegenüber weist die Innenseite der Aufweitung 767 vorzugsweise keine Strukturen auf, sondern ist im Wesentlichen mit einer glatten Oberfläche ausgebildet. Insbesondere mag die Aufweitung im Querschnitt eine kreisförmige Struktur (siehe Fig. 7) oder eine Form aus einem oder mehreren elliptischen Abschnitten haben. Somit kann ein sich verjüngender Kanal erreicht werden, welcher zusammen mit der Rotation des Staubalkens dazu führt, dass gezielt Einfluss auf Dehn- und Scherdeformationen der Schmelze genommen werden kann, wenn diese den sich verjüngenden Kanal passiert. Vorteilhafterweise wird eine Lagerseite der Aufweitung, d.h. eine Seite, auf welcher der Staubalken aufliegt oder läuft (siehe unterer Abschnitt in Fig. 7), eine zu der Kontur des Staubalken passende Form aufweisen, so dass eine gute Lagerung des Staubalkens ermöglicht wird. Die gegenüberliegende Seite, welche als Scherspaltseite bezeichnet werden kann und in der der Kanal zur Passage der Schmelze ausgebildet ist, ist vorzugsweise derart ausgebildet, dass der freie Querschnitt von der Einlassseite zur Auslassseite kontinuierlich abnimmt. Es sollte auch beachtet werden, dass vorteilhafterweise ein Übergang zwischen der Einlaufseite 761 zu der Aufweitung und ein Übergang zwischen der Aufweitung und der Auslaufseite 762 derart ausgeführt wird, dass sich die Strömungsverhältnisse am Übergang möglichst kontinuierlich ändern und keine abrupten Änderungen derselben stattfinden. In diesem Zusammenhang ist die Fig. 7 nur als eine schematische Prinzipskizze anzusehen. Beispielsweise können Radien im Übergangsbereich und/oder Querschnitte im Übergangsbereich derart ausgewählt werden, dass ein solch kontinuierlicher Übergang der Strömungsverhältnisse ermöglicht ist.

Zusammenfassend wird gemäß einem exemplarischen Ausführungsbeispiel ein Verfahren zum Steuern eines Extrusionsprozesses geschaffen, bei welchem mittels eines steuerbaren oder dynamischen Staubalkens, welcher in einem Extrusionskanal einer Extrusionsvorrichtung angeordnet ist, Prozessführungsparameter beeinflusst werden. Insbesondere mag der steuerbare Staubalken mittels zumindest einer Walze ausgebildet sein, welche sowohl rotatorisch als auch axial bewegbar ist. Mittels der Steuerung der Bewegung und einer optionalen Temperatursteuerung können Betriebszustände oder Einflussgrößen der zumindest einen Walze eingestellt werden. Die Einflussgrößen des steuerbaren Staubalkens sind, der Walzendurchmesser, Walzenspalt, konische bzw. verjüngende Walzenspalte, der Walzenumschlingungswinkel bzw. die Spaltlänge, die Drehzahl, der Rotationswinkel und die Schwingungsfrequenz einer oszillierenden Bewegung. Die äußeren Abmessungen des dynamischen Staubalkens können vorzugsweise vorab auf ein definiertes Arbeitsfeld durch rheologische und thermodynamische Berechnungen ausgelegt werden. Eine Lagerung der Walzen kann mittels einer Lagerung der Walzen mittels einer Gleitschuhoberfläche und seitlicher Dränage ausgeführt werden. Sägezahnnuten mit einem geringen Anstellwinkel bzw. Vertiefungen sind in einer Gehäusemulde der Extrusionsvorrichtung spiralförmig eingearbeitet, sodass das Leck seitwärts abfließen kann. Eine weitere Lagerungsmöglichkeit ist mittels Buchsen aus der Keramik (z.B. ZiO₂) möglich, die neben den Gleiteigenschaften auch zum Werkzeuggehäuse hin eine thermische Isolierung darstellen.

Durch die Steuerung der Betriebszustände des steuerbaren Staubalkens kann es möglich sein, definierte zeitliche Druckabfallsraten bei verschiedenen Durchsätzen und Polymeren mit ein und derselben Düse einzustellen. Ferner mag eine Beeinflussung der Scher- und Dehnspannungsverteilung über der Düsenspalthöhe sowie eine gleichmäßigere Schmelze-Deformationen über der Düsenbreite ermöglicht werden. Durch die Vermeidung von Lochdüsenkonstruktionen mögen gleichmäßigere Platten- bzw. Folienoberflächen erzielbar sein. Es ist eine zusätzliche Temperaturführung durch die Walzenoberfläche gegeben, mit der lokal, beispielsweise im Randbereich des Extrusionskanals, das Blasenwachstum beeinflusst werden kann. Ferner erhält man, insbesondere bei teilkristallinen Polymeren, eine höhere Flexibilität der Prozessführung in Richtung maßgeschneiderter Schaumstrukturen mit verschiedenen Polymeren.

Anschaulich wird somit ein Verfahren zum Steuern eines Extrusionsprozesses, insbesondere eines Extrusionsschäumprozesses im Formgebungsbereich eines Halbzeuges mittels eines oder mehrerer den Strömungskanal umschließender, beweglicher Wandelemente geschaffen. Hierbei mögen die Wandelemente durch steuerbare Staubalken gebildet werden. Mittels der beweglichen Wandelemente kann die natürliche Druckströmung, d.h. die Druckströmung, die sich im Werkzeug ohne Vorhandensein der beweglichen Wandelemente (z.B. Staubalken) im Werkzeug einstellen würden, im Werkzeug so geändert werden, dass produktabhängig zusätzliche Dehn- und Scherdeformationen im Formgebungsbereich auftreten. Die Dehn- und Scherdeformationen können hierbei über den Strömungsquerschnitt der Extrusionsdüse bewirken, dass die Thermodynamik der Nukleierung bzw. Keimbildung und damit die Gasphasenausbildung so beeinflusst wird, dass mit ein und derselben Extrusionsdüse bzw. Extrusionsvorrichtung verschiedene produktspezifische Polymerschaumeigenschaften eingestellt oder erzeugt werden können.

Vorzugsweise umfasst eine Steuereinheit bewegliche Wandelemente oder steuert solche beweglichen Wandelemente, die sich in alle Raumrichtungen bewegen können, insbesondere jedoch eine Rotationsbewegung und eine Axialbewegung entlang der Längsachse durchführen können. Ein Steuern oder Regeln der beweglichen Wandelemente kann dazu verwendet werden, Prozesszustände für Nukleierungsraten pro Zeit- und Volumeneinheit zu beeinflussen oder zu steuern. Die Beeinflussung mag mittels zeitlicher Druckabfälle der Polymermischung oder Schmelze im Düsenmundbereich, d.h. im Austrittsbereich der Extrusionsdüse, sowie zusätzlicher Dehn- und Scherdeformationen geschehen. Die Dehn- und Scherdeformationen werden hierbei insbesondere durch eine Konvergenz der Extrusionskanalgeometrie, d.h. durch eine Verjüngung des Extrusionskanals, und die Bewegungsgeschwindigkeit der Wandelemente hervorgerufen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsformen beschrieben worden sind, auch in Kombination mit anderen Merkmalen oder Schritten anderer oben beschriebener Ausführungsformen verwendet werden können. Bezugszeichen in den Ansprüchen sind nicht als Einschränkung anzusehen.

## Patentansprüche

1. Verfahren zum Steuern eines Extrusionsschäumprozesses, welches mittels einer Extrusionsvorrichtung (100) durchgeführt wird, wobei die Extrusionsvorrichtung einen Extrusionskanal (320) mit einer Extrusionsdüse (540), welche dazu eingerichtet ist, eine Extrusionsmasse aus der Extrusionsvorrichtung auszugeben, wobei im Extrusionskanal (320) ein steuerbarer Staubalken (430, 431, 541, 651, 650) angeordnet ist, und eine Steuereinheit aufweist, wobei das Verfahren aufweist:
Steuern des Extrusionsprozesses mittels Einstellens eines Wertes zumindest eines Prozessführungsparameters des Extrusionsprozesses mittels Steuerns eines Betriebszustandes des steuerbaren Staubalkens (430, 431, 541, 651, 650),
wobei das Steuern des Extrusionsprozesses mittels Einstellens einer Bewegung des steuerbaren Staubalkens (430, 431, 541, 651, 650) durchgeführt wird,
dadurch gekennzeihnet, dass
die Bewegung des steuerbaren Staubalkens (430, 431, 541, 651, 650) eine oszillierende Rotationsbewegung und/oder eine axiale Translationsbewegung entlang einer Längsachse des Staubalkens ist, wobei die Translationsbewegung quer zur Extrusionsrichtung durchgeführt wird.

2. Verfahren gemäß Anspruch 1, wobei der Prozessführungsparameter eine Keimbildungsrate und/oder einen Lösungsdruck, und/oder eine Zellwachstumsgeschwindigkeit beeinflusst.

3. Verfahren gemäß Anspruch 1 oder 2, wobei die Translationsbewegung oszillierend ist.

4. Verfahren gemäß einem der Ansprüche 1 bis 3, wobei der Staubalken (430, 431, 541, 651, 650) in einer Aufweitung (767) des Extrusionskanals (320) angeordnet ist und wobei die Bewegung bezüglich einer Achse des Staubalkens (430, 431, 541, 651, 650) durchgeführt wird, welche zentrisch oder exzentrisch bezüglich einer Mittelachse der Aufweitung (767) angeordnet ist.

5. Verfahren gemäß einem der Ansprüche 1 bis 4, wobei der Betriebszustand des steuerbaren Staubalkens (430, 431, 541, 651, 650) einer aus der Gruppe ist bestehend aus:
Rotationsgeschwindigkeit des Staubalkens;
Rotationsrichtung des Staubalkens;
Translationsgeschwindigkeit des Staubalkens
Translationsrichtung des Staubalkens; und
Temperatur des Staubalkens.

6. Verfahren gemäß einem der Ansprüche 1 bis 5, wobei die Extrusionsvorrichtung einen zweiten Staubalken (431, 541, 651) aufweist.

7. Verfahren gemäß Anspruch 6, wobei der zweite Staubalken (431, 651) eine Bewegung durchführt, welche gleich einer Bewegung des steuerbaren Staubalkens (430, 650) ist oder wobei der zweite Staubalken eine Bewegung durchführt, welche zu einer Bewegung des steuerbaren Staubalkens unterschiedlich ist.

8. Extrusionsvorrichtung (100) für einen Extrusionsschäumprozess, wobei die Extrusionsvorrichtung aufweist:
einen Extrusionskanal (320) mit einer Extrusionsdüse (540);
einen steuerbaren Staubalken (430, 431, 541, 651, 650); und
eine Steuereinheit;
wobei die Extrusionsdüse (540) dazu eingerichtet ist, eine Extrusionsmasse aus der Extrusionsvorrichtung auszugeben;
wobei der steuerbare Staubalken (430, 431, 541, 651, 650) in dem Extrusionskanal angeordnet ist; und
**dadurch gekennzeichnet, dass**
die Steuereinheit derart eingerichtet ist, dass ein Wert zumindest eines Prozessführungsparameters eines Extrusionsprozesses mittels Steuerns eines Betriebszustandes des steuerbaren Staubalkens (430, 431, 541, 651, 650) einstellbar ist,
wobei das Steuern des Extrusionsprozesses mittels Einstellens einer Bewegung des steuerbaren Staubalkens (430, 431, 541, 651, 650) durchgeführt wird,
wobei die Bewegung des steuerbaren Staubalkens (430, 431, 541, 651, 650) eine oszillierende Rotationsbewegung und/oder eine axiale Translationsbewegung entlang einer Längsachse des Staubalkens ist, wobei die Translationsbewegung quer zur Extrusionsrichtung durchgeführt wird.

9. Extrusionsvorrichtung gemäß Anspruch 8, wobei der steuerbare Staubalken (430, 431, 541, 651, 650) und/oder eine Ausnehmung (432, 433), innerhalb der der steuerbare Staubalken angeordnet ist, eine spiralförmige Vertiefung aufweist.

10. Extrusionsvorrichtung gemäß einem der Ansprüche 8 oder 9, wobei der steuerbare Staubalken (430, 431, 541, 651, 650) und/oder eine Ausnehmung (432, 433) innerhalb der der steuerbare Staubalken (430, 431, 541, 651, 650) angeordnet ist, eine strukturierte Oberfläche, insbesondere mit einem sägezahnartigen Profil, aufweist.

11. Extrusionsvorrichtung gemäß einem der Ansprüche 8 bis 10, wobei die Extrusionsvorrichtung eine Mehrzahl von Extrusionsdüsen aufweist.

12. Extrusionsvorrichtung gemäß einem der Ansprüche 8 bis 11, welche ferner eine Sensoreinheit aufweist, welche dazu eingerichtet ist, einen Betriebszustand des steuerbaren Staubalkens zu bestimmen.

13. Computerlesbares Medium, auf welchem ein Computerprogramm gespeichert ist, wobei das Computerprogramm derart eingerichtet ist, dass es, wenn es auf einem Prozessor ausgeführt wird, ein Verfahren gemäß einem der Ansprüche 1 bis 7 steuert.

## Claims

1. Method for controlling an extrusion foaming process which is carried out using an extrusion arrangement (100), wherein the extrusion arrangement comprises an extrusion channel (320) with an extrusion nozzle (540) which is adapted to expel an extrusion material from the extrusion arrangement, wherein a controllable banking beam (430, 431, 541, 651, 650) is arranged within the extrusion channel (320), and a control unit, wherein the method comprises:
controlling the extrusion process by adjusting a value of at least one process control parameter of the extrusion process by controlling an operational state of the controllable banking beam (430, 431, 541, 651, 650),
wherein the controlling the extrusion process is carried out by adjusting a movement of the controllable banking beam (430, 431, 541, 651, 650),
**characterized in that**
the movement of the controllable banking beam (430, 431, 541, 651, 650) is an oscillating rotation movement and/or an axial translation movement along a longitudinal axis of the banking beam, wherein the translational movement is carried out traverse to the extrusion direction.

2. Method according to claim 1 wherein the process control parameter influences a nucleatopm forming rate and/or a solvation pressure and/or a cell growth velocity.

3. Method according to claim 1 or 2, wherein the translational movement is oscillating.

4. Method according to one of claims 1 to 3, wherein the banking beam (430, 431, 541, 651, 650) is arranged in a widening (767) of the extrusion channel (320) and wherein the movement is carried out with respect to an axis of the banking beam (430, 431, 541, 651, 650) which is arranged centrically or eccentrically with respect to a middle axis of the widening (767).

5. Method according to one of claims 1 to 4, wherein the operational state of the controllable banking beam (430, 431, 541, 651, 650) is one out of a group consisting of:
rotation velocity of the banking beam;
rotation direction of the banking beam;
translation velocity of the banking beam;
translation direction of the banking beam; and
temperature of the banking beam.

6. Method according to one of claims 1 to 5, wherein the extrusion arrangement comprises a second banking beam (431, 541, 651).

7. Method according to claim 6, wherein the second banking beam (431, 651) carries out a movement which is same as a movement of the controllable banking beam (430, 650) or wherein the second banking beam carries out a movement which is different from the movement of the controllable banking beam.

8. Extrusion arrangement (100) for an extrusion foam process, wherein the extrusion arrangement comprises:
an extrusion channel (320) with an extrusion nozzle (540);
a controllable banking beam (430, 431, 541, 651, 650); and
a control unit;
wherein the extrusion nozzle (540) is adapted to expel an extrusion material from the extrusion arrangement;
wherein the controllable banking beam (430, 431, 541, 651, 650) is arranged within the extrusion channel; and
**characterized in that**
the control unit is adapted such that a value of at least one process control parameter of an extrusion process is adjustable by controlling an operational state of the controllable banking beam (430, 431, 541, 651, 650),
wherein the controlling the extrusion process is carried out by adjusting a movement of the controllable banking beam (430, 431, 541, 651, 650),
wherein the movement of the controllable banking beam (430, 431, 541, 651, 650) is an oscillating rotation movement and/or an axial translation movement along a longitudinal axis of the banking beam, wherein the translation movement is carried out traverse to the extrusion direction.

9. Extrusion arrangement according to claim 8, wherein the controllable banking beam (430, 431, 541, 651, 650) and/or a recess (432, 433) within which the controllable banking beam is arranged comprises a spiral shaped depression.

10. Extrusion arrangement according to one of claims 8 or 9, wherein the controllable banking beam (430, 431, 541, 651, 650) and/or a recess (432, 433) within which the controllable banking beam (430, 431, 541, 651, 650) is arranged comprises a structured surface, in particular having a saw tooth like profile.

11. Extrusion arrangement according to one of claims 8 to 10, wherein the extrusion arrangement comprises a plurality of extrusion nozzles.

12. Extrusion arrangement according to one of claims 8 to 11, which further comprises a sensor unit which is adapted to determine an operational state of the controllable banking beam.

13. Computer-readable medium on which a computer program is stored, wherein the computer program is configured, when executed by a processor, to control a method according to one of claims 1 to 7.

## Revendications

1. Procédé servant à commander un processus de moussage-extrusion, lequel est mis en oeuvre au moyen d'un dispositif d'extrusion (100), le dispositif d'extrusion présentant un canal d'extrusion (320) avec une buse d'extrusion (540), laquelle est mise au point pour distribuer une masse d'extrusion provenant du dispositif d'extrusion, une poutre de retenue (430, 431, 541, 651, 650) pouvant être commandée étant disposée dans le canal d'extrusion (320), et une unité de commande, le procédé présentant :
la commande du processus d'extrusion au moyen du réglage d'une valeur d'au moins un paramètre de pilotage de processus du processus d'extrusion au moyen de la commande d'un état de fonctionnement de la poutre de retenue (430, 431, 541, 651, 650) pouvant être commandée,
la commande du processus d'extrusion étant mise en oeuvre au moyen du réglage d'un déplacement de la poutre de retenue (430, 431, 541, 651, 650) pouvant être commandée,
**caractérisé en ce que**
le déplacement de la poutre de retenue (430, 431, 541, 651, 650) pouvant être commandée est un déplacement par rotation oscillant et/ou un déplacement par translation axiale le long d'un axe longitudinal de la poutre de retenue, le déplacement par translation étant mis en oeuvre de manière transversale par rapport au sens d'extrusion.

2. Procédé selon la revendication 1, **caractérisé en ce que** le paramètre de pilotage de processus influence un taux de formation de germe et/ou une pression de dissolution et/ou une vitesse de croissance de cellules.

3. Procédé selon la revendication 1 ou 2, **caractérisé en ce que** le déplacement par translation est oscillant.

4. Procédé selon l'une quelconque des revendications 1 à 3, **caractérisé en ce que** la poutre de retenue (430, 431, 541, 651, 650) est disposée dans un élargissement (767) du canal d'extrusion (320) et **en ce que** le déplacement est mis en oeuvre par rapport à un axe de la poutre de retenue (430, 431, 541, 651, 650), lequel est disposé de manière centrée ou excentrée par rapport à un axe médian de l'élargissement (767).

5. Procédé selon l'une quelconque des revendications 1 à 4, **caractérisé en ce que** l'état de fonctionnement de la poutre de retenue (430, 431, 541, 651, 650) pouvant être commandée est l'un du groupe constitué de :
vitesse de rotation de la poutre de retenue ;
sens de rotation de la poutre de retenue ;
vitesse de translation de la poutre de retenue
sens de translation de la poutre de retenue ; et
température de la poutre de retenue.

6. Procédé selon l'une quelconque des revendications 1 à 5, **caractérisé en ce que** le dispositif d'extrusion présente une deuxième poutre de retenue (431, 541, 651).

7. Procédé selon la revendication 6, **caractérisé en ce que** la deuxième poutre de retenue (431, 651) met en oeuvre un déplacement, lequel est identique à un déplacement de la poutre de retenue (430, 650) pouvant être commandée ou **en ce que** la deuxième poutre de retenue met en oeuvre un déplacement, lequel est différent par rapport à un déplacement de la poutre de retenue pouvant être commandée.

8. Dispositif d'extrusion (100) pour un processus de moussage-extrusion, le dispositif d'extrusion présentant :
un canal d'extrusion (320) avec une buse d'extrusion (540) ;
une poutre de retenue (430, 431, 541, 651, 650) pouvant être commandée ; et
une unité de commande ;
la buse d'extrusion (540) étant mise au point pour distribuer une masse d'extrusion provenant du dispositif d'extrusion ;
la poutre de retenue (430, 431, 541, 651, 650) pouvant être commandée étant disposée dans le canal d'extrusion ; et
**caractérisé en ce que**
l'unité de commande est mise au point de telle manière qu'une valeur d'au moins un paramètre de pilotage de processus d'un processus d'extrusion peut être réglée au moyen de la commande d'un état de fonctionnement de la poutre de retenue (430, 431, 541, 651, 650) pouvant être commandée,
la commande du processus d'extrusion étant mise en oeuvre au moyen du réglage d'un déplacement de la poutre de retenue (430, 431, 541, 651, 650) pouvant être commandée,
le déplacement de la poutre de retenue (430, 431, 541, 651, 650) pouvant être commandée étant un déplacement par rotation oscillant et/ou un déplacement par translation axial le long d'un axe longitudinal de la poutre de retenue, le déplacement par translation étant mis en oeuvre de manière transversale par rapport au sens d'extrusion.

9. Dispositif d'extrusion selon la revendication 8, **caractérisé en ce que** la poutre de retenue (430, 431, 541, 651, 650) pouvant être commandée et/ou un évidement (432, 433), à l'intérieur duquel la poutre de retenue pouvant être commandée est disposée, présentent un renfoncement en forme de spirale.

10. Dispositif d'extrusion selon l'une quelconque des revendications 8 ou 9, **caractérisé en ce que** la poutre de retenue (430, 431, 541, 651, 650) pouvant être commandée et/ou un évidement (432, 433), à l'intérieur duquel la poutre de retenue (430, 431, 541, 651, 650) pouvant être commandée est disposée, présentent une surface structurée, en particulier avec un profil du type dent de scie.

11. Dispositif d'extrusion selon l'une quelconque des revendications 8 à 10, **caractérisé en ce que** le dispositif d'extrusion présente une pluralité de buses d'extrusion.

12. Dispositif d'extrusion selon l'une quelconque des revendications 8 à 11, lequel présente en outre une unité de capteur, laquelle est mise au point pour définir un état de fonctionnement de la poutre de retenue pouvant être commandée.

13. Support lisible par ordinateur, sur lequel un programme informatique est mémorisé, **caractérisé en ce que** le programme informatique est mis au point de telle manière que, quand il est exécuté sur un processeur, il commande un procédé selon l'une quelconque des revendications 1 à 7.
